# EUROPÄISCHE PATENTANMELDUNG

(11) **EP 1 216 873 A2**
(43) Veröffentlichungstag der Anmeldung: **26.06.2002**
(21) Anmeldenummer: 01129952.6
(22) Anmeldetag: 17.12.2001
(51) Int. Cl.: B60K 15/035

(54) **Entlüftungseinrichtung für einen Kraftstofftank**

(30) Priorität: 22.12.2000 DE 10064592
(71) Anmelder: SIEMENS AKTIENGESELLSCHAFT, 80333 München (DE)
(72) Erfinder: Distelhoff, Markus, Dr., 64347 Griesheim (DE); Fühling, Stefan, Dr., 44269 Dortmund (DE); Klöker, Justus, Dr., 61267 Neu-Anspach (DE); Meyer, Knut, Dr., 45239 Essen (DE); Zapp, Thomas, Dr., 44265 Dortmund (DE)

(57) **Zusammenfassung**

Eine Entlüftungseinrichtung (2) für einen Kraftstoffbehälter (1) eines Kraftfahrzeuges hat einen Verdichter (4) zum Absaugen von Gasen aus dem Kraftstoffbehälter (1) und zum Fördern in einen Druckbehälter (5). Im Stillstand des Kraftfahrzeuges läßt sich der Druck innerhalb des Kraftstoffbehälters (1) über eine entsprechende Ansteuerung des Verdichters (4) regeln. In dem Druckbehälter (5) angesammelte Gase werden einer Brennkraftmaschine des Kraftfahrzeuges zugeführt.

## Beschreibung

Die Erfindung betrifft eine Entlüftungseinrichtung für einen Kraftstoffbehälter eines Kraftfahrzeuges.

Entlüftungseinrichtungen heutiger Kraftfahrzeuge haben einen mit dem Kraftstoffbehälter verbundenen Aktivkohlefilter. Beim Betanken des Kraftstoffbehälters und bei einem beispielsweise durch Temperaturerhöhung hervorgerufenen Druckaufbau im Kraftstoffbehälter werden Gase aus dem Kraftstoffbehälter durch den Aktivkohlefilter in die Umgebung geleitet. Im Betrieb kann der Aktivkohlefilter mit Frischluft gespült und angesammelter Kraftstoff einer Brennkraftmaschine des Kraftfahrzeuges zugeführt werden. Der Aktivkohlefilter adsorbiert den Kraftstoff aus den Gasen und verhindert, daß Kraftstoffdämpfe in die Umgebung gelangen.

Nachteilig bei der bekannten Entlüftungseinrichtung ist jedoch, daß der Aktivkohlefilter insbesondere in langen Standphasen des Kraftfahrzeuges gesättigt werden kann und anschließend Kraftstoffdämpfe ungehindert in die Umwelt gelangen können.

Der Erfindung liegt das Problem zugrunde, eine Entlüftungseinrichtung der eingangs genannten Art so zu gestalten, daß sie ein Entweichen von Kraftstoffdämpfen in die Umwelt zuverlässig verhindert.

Dieses Problem wird erfindungsgemäß dadurch gelöst, daß ein Verdichter zum Absaugen von Gasen aus dem Kraftstoffbehälter und zum Fördern in einen Druckbehälter vorgesehen ist und daß der Druckbehälter zum Sammeln der Gase gestaltet ist.

Durch diese Gestaltung werden in dem Kraftstoffbehälter befindliche Gase von dem Verdichter abgesaugt und in den Druckbehälter gefördert und damit in dem Druckbehälter zwischengespeichert. Hierdurch gelangen keine Kraftstoffdämpfe in die Umgebung. Die Ansteuerung des Verdichters kann beispielsweise in Stillstandsphasen der Brennkraftmaschine druckabhängig und/oder während des Betankungsvorgangs erfolgen. Beim Betrieb des Verdichters sinkt der Druck innerhalb des Kraftstoffbehälters und steigt innerhalb des Druckbehälters. Damit läßt sich der Druck innerhalb des Kraftstoffbehälters durch eine entsprechende Steuerung des Verdichters einfach einstellen. Dank der Erfindung ist innerhalb des Druckbehälters kein Aktivkohlefilter erforderlich. Ein weiterer Vorteil der erfindungsgemäßen Entlüftungseinrichtung besteht darin, daß der Verdichter zur Tankleckdiagnose genutzt werden kann. Bei einem vorgesehenen Unterdruck erfolgt dann die Erkennung eines Lecks über die Leistungsaufnahme des Verdichters.

Bei besonders langen Standzeiten des Kraftfahrzeuges kann der Maximaldruck in dem Druckbehälter erreicht werden. Ein Entweichen von Kraftstoff in die Umgebung über ein Sicherheitsventil läßt sich gemäß einer anderen vorteilhaften Weiterbildung der Erfindung besonders gering halten, wenn der Druckbehälter Mittel zur Abscheidung des Kraftstoffs aus den gesammelten Gasen aufweist.

Kraftstoff läßt sich gemäß einer anderen vorteilhaften Weiterbildung der Erfindung aus den im Druckbehälter gespeicherten Gasen entfernen, wenn der Druckbehälter eine Kühleinrichtung hat. In der Kühleinrichtung kann der Kraftstoff auskondensieren.

Die Kühleinrichtung gestaltet sich gemäß einer anderen vorteilhaften Weiterbildung der Erfindung besonders kostengünstig, wenn die Kühleinrichtung ein Peltier-Element aufweist.

Der Kraftstoffbehälter und die erfindungsgemäße Entlüftungseinrichtung haben eine sehr kleine Oberfläche und eine besonders geringe Anzahl von Anschlüssen, wenn der Verdichter und der Druckbehälter innerhalb des Kraftstoffbehälters angeordnet sind. Hierdurch wird ein Diffundieren von Kraftstoff aus dem Kraftstoffbehälter besonders gering gehalten. Weiterhin wird eine kostenintensive Verlegung von Leitungen zwischen dem Kraftstoffbehälter und dem Druckbehälter vermieden. Die Montage der erfindungsgemäßen Entlüftungseinrichtung gestaltet sich hierdurch besonders einfach.

Der Druckbehälter läßt sich gemäß einer anderen vorteilhaften Weiterbildung der Erfindung einfach entleeren, wenn der Druckbehälter ein schaltbares Ablaßventil zur Überführung des gesammelten Kraftstoffs in den Kraftstoffbehälter aufweist. Das Ablaßventil kann beispielsweise elektrisch oder in Abhängigkeit von einem vorgesehenen Druckverhältnis zwischen dem Druckbehälter und dem Kraftstoffbehälter geschaltet werden.

Der Druck innerhalb des Druckbehälters läßt sich gemäß einer anderen vorteilhaften Weiterbildung der Erfindung einfach absenken, wenn der Druckbehälter zur Verbindung mit einem Ansaugkanal einer Brennkraftmaschine des Kraftfahrzeuges vorgesehen ist.

Beim Betanken des Kraftstoffbehälters und beim Stillstand der Brennkraftmaschine werden die Gase zuverlässig in dem Druckbehälter gesammelt, wenn eine zu dem Ansaugkanal der Brennkraftmaschine führende Leitung des Druckbehälters ein Schaltventil aufweist.

Bei einem Überdruck im Druckbehälter wird ein Entweichen von Kraftstoffdämpfen in die Umgebung zuverlässig verhindert, wenn die zu dem Ansaugkanal der Brennkraftmaschine führende Leitung mit einem Aktivkohlefilter verbunden ist. Da dank der Erfindung ein großer Teil der entstehenden Kraftstoffdämpfe in dem Druckbehälter gesammelt werden, bevor ein Überdruck im Druckbehälter entsteht, benötigt der Aktivkohlefilter nur sehr geringe Abmessungen. Da der Aktivkohlefilter hierbei im Gegensatz zu der bekannten Entlüftungseinrichtung keinen Einfluß auf den Druck innerhalb des Kraftstoffbehälters hat, wird dank der Erfindung ein durch den Aktivkohlefilter erzeugter Druckanstieg in dem Kraftstoffbehälter bei dessen Betanken vermieden.

Eine ständige Belastung des Aktivkohlefilters mit Kraftstoffdämpfen läßt sich gemäß einer anderen vorteilhaften Weiterbildung der Erfindung einfach vermeiden, wenn vor dem Aktivkohlefilter ein Überdruckventil angeordnet ist.

Ein Unterdruck im Kraftstoffbehälter läßt sich gemäß einer anderen vorteilhaften Weiterbildung der Erfindung zuverlässig vermeiden, wenn der Kraftstoffbehälter ein bei einem Unterdruck öffnendes Entlüftungsventil aufweist.

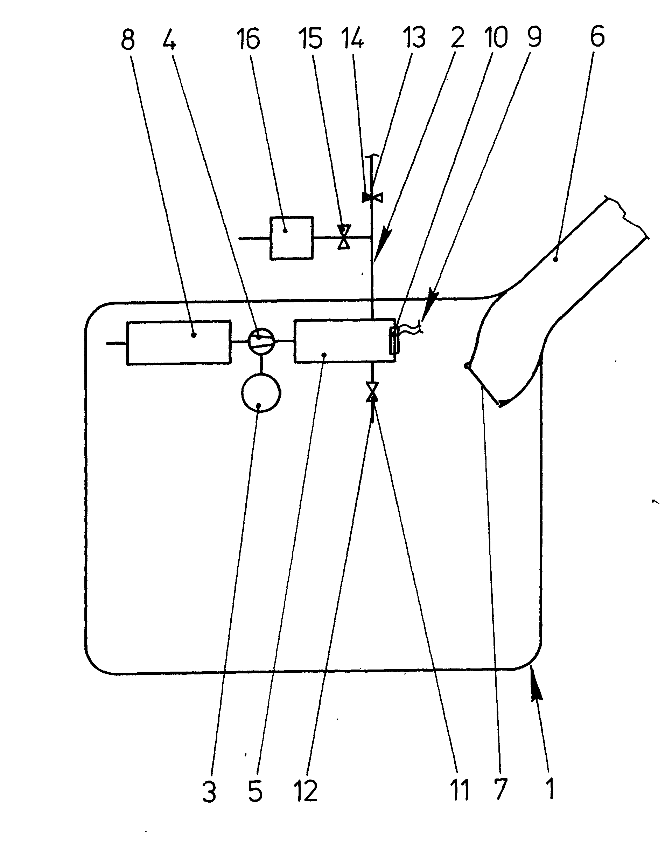

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt schematisch in einer einzigen Figur einen Kraftstoffbehälter 1 mit einer erfindungsgemäßen Entlüftungseinrichtung 2.

Die Entlüftungseinrichtung 2 hat einen innerhalb des Kraftstoffbehälters 1 angeordneten, von einem Elektromotor 3 angetriebenen Verdichter 4 und einen ebenfalls innerhalb des Kraftstoffbehälters 1 angeordneten Druckbehälter 5. Der Kraftstoffbehälter 1 hat einen Einfüllstutzen 6 mit einer Rückschwallklappe 7. In Strömungsrichtung vor dem Verdichter 4 befindet sich ein mit dem Kraftstoffbehälter 1 verbundener Ausgleichsbehälter 8. In dem Ausgleichsbehälter 8 werden Gase von flüssigem Kraftstoff getrennt und damit ein Ansaugen von flüssigem Kraftstoff durch den Verdichter 4 verhindert. Der Druckbehälter 5 hat eine Kühleinrichtung 9 mit einem Peltier-Element 10. Der Bodenbereich des Druckbehälters 5 ist über eine von einem Ablaßventil 11 sperrbare Leitung 12 mit dem Kraftstoffbehälter 1 verbunden. Von dem oberen Bereich des Druckbehälters 5 führt eine Leitung 13 zu einem nicht dargestellten Ansaugkanal einer Brennkraftmaschine. Die Leitung 13 läßt sich von einem Schaltventil 14 wahlweise schließen oder freigeben. Zwischen dem Schaltventil 14 und dem Druckbehälter 5 führt ein Abzweig über ein Überdruckventil 15 zu einem Aktivkohlefilter 16.

Der Verdichter 4 saugt Gase aus dem Ausgleichsbehälter 8 an und fördert diese in den Druckbehälter 5. In dem Druckbehälter 5 werden die abgesaugten Gase gesammelt und von der Kühleinrichtung 9 gekühlt. Hierdurch gelangen bei einem Stillstand der Brennkraftmaschine keine Gase in die Umgebung. In dem Druckbehälter 5 kondensiert ein Teil des Kraftstoffs aus den abgesaugten Gasen aus und sammelt sich in dessen Bodenbereich. In dem Druckbehälter 5 angesammelte Gase werden beim Betrieb der Brennkraftmaschine deren Ansaugkanal zugeführt. Die Steuerung des den Verdichter 4 antreibenden Elektromotors 3 kann beispielsweise bei einem Öffnen der Rückschwallklappe 7 beim Betanken des Kraftstoffbehälters 1 und ansonsten in Abhängigkeit von dem Druck innerhalb des Kraftstoffbehälters 1 erfolgen. Das in der den Bodenbereich des Druckbehälters 5 mit dem Kraftstoffbehälter 1 verbindenden Leitung 12 angeordnete Ablaßventil 11 kann beispielsweise oberhalb einer vorgesehenen Druckdifferenz zwischen dem Druckbehälter 5 und dem Kraftstoffbehälter 1 geöffnet werden. Dabei gelangt der angesammelte Kraftstoff in den Kraftstoffbehälter 1 zurück. Bei einem Überdruck innerhalb des Druckbehälters 5 öffnet das zwischen dem Aktivkohlefilter 16 und dem Druckbehälter 5 angeordnete Überdruckventil 15. Das Überdruckventil 15 dient damit ausschließlich als Sicherheitsventil. Bei ausreichend großem Druckbehälter 5 kann damit auf den Aktivkohlefilter 16 verzichtet werden.

## Patentansprüche

1. Entlüftungseinrichtung für einen Kraftstoffbehälter eines Kraftfahrzeuges, **dadurch gekennzeichnet, daß** ein Verdichter (4) zum Absaugen von Gasen aus dem Kraftstoffbehälter (1) und zum Fördern in einen Druckbehälter (5) vorgesehen ist und daß der Druckbehälter (5) zum Sammeln der Gase gestaltet ist.

2. Entlüftungseinrichtung nach Anspruch 1, **dadurch gekennzeichnet, daß** der Druckbehälter (5) Mittel zur Abscheidung des Kraftstoffs aus den gesammelten Gasen aufweist.

3. Entlüftungseinrichtung nach Anspruch 1 oder 2, **dadurch gekennzeichnet, daß** der Druckbehälter (5) eine Kühleinrichtung (9) hat.

4. Entlüftungseinrichtung nach zumindest einem der vorhergehenden Ansprüche, **dadurch gekennzeichnet, daß** die Kühleinrichtung (9) ein Peltier-Element (10) aufweist.

5. Entlüftungseinrichtung nach zumindest einem der vorhergehenden Ansprüche, **dadurch gekennzeichnet, daß** der Verdichter (4) und der Druckbehälter (5) innerhalb des Kraftstoffbehälters (1) angeordnet sind.

6. Entlüftungseinrichtung nach zumindest einem der vorhergehenden Ansprüche, **dadurch gekennzeichnet, daß** der Druckbehälter (5) ein schaltbares Ablaßventil (11) zur Überführung des gesammelten Kraftstoffs in den Kraftstoffbehälter (1) aufweist.

7. Entlüftungseinrichtung nach zumindest einem der vorhergehenden Ansprüche, **dadurch gekennzeichnet, daß** der Druckbehälter (5) zur Verbindung mit einem Ansaugkanal einer Brennkraftmaschine des Kraftfahrzeuges vorgesehen ist.

8. Entlüftungseinrichtung nach zumindest einem der vorhergehenden Ansprüche, **dadurch gekennzeichnet, daß** eine zu dem Ansaugkanal der Brennkraftmaschine führende Leitung (13) des Druckbehälters (5) ein Schaltventil (14) aufweist.

9. Entlüftungseinrichtung nach zumindest einem der vorhergehenden Ansprüche, **dadurch gekennzeichnet, daß** die zu dem Ansaugkanal der Brennkraftmaschine führende Leitung (13) mit einem Aktivkohlefilter (16) verbunden ist.

10. Entlüftungseinrichtung nach zumindest einem der vorhergehenden Ansprüche, **dadurch gekennzeichnet, daß** vor dem Aktivkohlefilter (16) ein Überdruckventil (15) angeordnet ist.

11. Entlüftungseinrichtung nach zumindest einem der vorhergehenden Ansprüche, **dadurch gekennzeichnet, daß** der Kraftstoffbehälter (1) ein bei einem Unterdruck öffnendes Entlüftungsventil aufweist.
